# FASCICULE DE BREVET EUROPEEN

(11) **EP 3 750 693 B1**
(45) Date de publication et mention de la délivrance du brevet: **30.07.2025**
(21) Numéro de dépôt: 20179848.5
(22) Date de dépôt: 12.06.2020
(51) Int. Cl.: B29C 70/12, B29C 70/88, B64C 1/00

(54) **PROCÉDÉ DE FABRICATION D'UN MATÉRIAU COMPOSITE THERMOPLASTIQUE ÉLECTRIQUEMENT CONDUCTEUR**
VERFAHREN ZUR HERSTELLUNG EINES ELEKTRISCH LEITENDEN THERMOPLASTISCHEN VERBUNDMATERIALS
METHOD FOR MANUFACTURING AN ELECTRICALLY CONDUCTIVE THERMOPLASTIC COMPOSITE MATERIAL

(30) Priorité: 14.06.2019 FR 1906414
(43) Date de publication de la demande: 16.12.2020
(73) Titulaire: Liebherr-Aerospace Toulouse SAS, 31200 Toulouse (FR)
(72) Inventeur: ROSSIGNOL, Claude, 31016 TOULOUSE Cedex 2 (FR); ROBERT, Elise, 31016 TOULOUSE Cedex 2 (FR)
(74) Mandataire: Bringer IP

(56) Documents cités:
- US-A1- 2006 235 135
- US-A1- 2016 107 739
- US-A1- 2017 154 703

## Description

### Domaine technique de l'invention

L'invention concerne un procédé de fabrication d'un matériau composite thermoplastique présentant des propriétés de conductivité électrique. L'invention concerne également un équipement d'un véhicule aérien comprenant un matériau composite thermoplastique électriquement conducteur obtenu à partir dudit procédé de fabrication.

### Arrière-plan technologique

Actuellement, l'utilisation de matériaux composites thermoplastiques est de plus en plus fréquente dans le domaine de l'aéronautique car ils présentent de nombreux avantages par rapport à des alliages métalliques. En effet, un matériau composite thermoplastique est par exemple composé d'une matrice thermoplastique formée par du polyaryl éther cétone (PAEK), une famille de plastiques semi-cristallins capables de résister à des températures élevées tout en conservant une très grande résistance. L'intérêt de ces matériaux composites thermoplastiques réside dans le gain de masse, mais également dans une meilleure résistance à la fatigue et à l'absence de corrosion.

La matrice thermoplastique est associée à des renforts, principalement des fibres de carbone dans le domaine de l'aéronautique pour des raisons de poids, et forme ainsi le matériau thermoplastique composite. Les composites thermoplastiques sont souvent mis en forme par injection. Cette dernière est largement utilisée car elle permet d'avoir une grande productivité. Il est bien connu qu'un matériau thermoplastique formé par une matrice PAEK et des fibres de carbone n'est pas un conducteur électrique.

Par conséquent, afin de rendre conducteur un matériau composite thermoplastique, il est possible de fonctionnaliser ce matériau composite par ajout de nanotubes de carbone. En effet, les nanotubes de carbone présentent d'excellentes propriétés thermiques, mécaniques et électriques. Aussi, il a été démontré dans la demande de brevet WO2014023977 que l'ajout d'une certaine quantité de nanotubes de carbone dans une matrice thermoplastique permet d'améliorer la conductivité électrique d'un matériau thermoplastique. Cependant, l'intégration de nanotubes de carbone dans une matrice thermoplastique est un processus complexe et couteux. En effet, au cours d'un procédé d'injection pour concevoir le matériau composite, il est difficile de disperser de manière homogène les nanotubes de carbone au sein de la matrice thermoplastique. De plus, l'étape d'intégration des nanotubes de carbone peut être difficile étant donné que la dispersion des nanotubes de carbone est dépendante du type de matrice utilisée, de la nature des nanotubes de carbone et de la viscosité de la matrice. Lorsque des nanotubes de carbone sont insérés dans la matrice lors d'une injection, la viscosité du mélange augmente ce qui complexifie le processus d'obtention d'un matériau thermoplastique par injection. En outre, le seuil de percolation électrique, correspondant à une concentration critique en particules conductrices permettant d'accroitre la conductivité électrique, est fortement dépendant de la dispersion de nanotubes de carbone dans la matrice.

Le document US2017154703A1 divulgue, selon son abrégé, un procédé de préparation d'un film composite électriquement conducteur comprenant au moins une résine polymère thermoplastique et des particules électriquement conductrices choisies parmi le graphène, les nanotubes de carbone, les nanofibres de carbone, et leurs mélanges et les nanoparticules métalliques filiformes; un procédé de préparation d'une structure composite stratifiée électriquement conductrice comprenant un tel film composite électriquement conducteur.

A ce titre, l'invention a pour but de remédier aux inconvénients de l'art antérieur en développant un procédé permettant d'obtenir des matériaux composites thermoplastiques qui présentent une conductivité électrique nettement améliorée.

### Objectifs de l'invention

L'invention vise à fournir un procédé de fabrication d'un matériau composite thermoplastique électriquement conducteur selon la revendication 1.

L'invention vise en particulier à fournir, un procédé de fabrication simple, rapide et efficace d'un matériau composite thermoplastique en tant que conducteur électrique.

L'invention vise également à fournir un matériau composite thermoplastique électriquement conducteur obtenu à partir du procédé de fabrication selon l'invention destiné à former un équipement pour véhicule de transport selon la revendication 6.

L'invention vise aussi à fournir un équipement d'un véhicule aérien comprenant un matériau thermoplastique électriquement conducteur obtenu à partir du procédé selon l'invention, selon la revendication 9.

### Exposé de l'invention

Pour ce faire, l'invention concerne un procédé de fabrication d'un matériau composite électriquement conducteur selon la revendication 1.

On entend par matériau composite un matériau composite thermoplastique, dit également composite thermoplastique ou matériau thermoplastique, thermostable comprenant une matrice constituée d'un polymère thermoplastique haute performance formée par des noyaux aromatiques. Les polymères thermoplastiques sont des matériaux rigides et résistants à des températures relativement élevées (jusqu'à 250°C à 300°C selon les matériaux thermoplastiques). Ils sont également considérés comme des matériaux isolants présentant des valeurs de conductivité électrique faibles (comprises entre 10⁻²⁰ Siemens/mètre (S/m) et 10⁻¹⁰ S/m).

La conductivité électrique permet de décrire les propriétés électriques des matériaux conducteurs et désigne la capacité du matériau à conduire le courant électrique. On entend dans la présente demande par un matériau conducteur, un matériau capable au minimum de décharger l'électricité statique. Un tel matériau conducteur peut par exemple présenter une conductivité électrique supérieure ou égale à 10 S/m.

Le matériau composite selon l'invention est formé par une matrice thermoplastique comprenant un polymère et des fibres courtes de carbone permettant ainsi d'améliorer très significativement la tenue en température de la matrice polymérique. En outre, la présence de fibres de carbone permet de maintenir les propriétés mécaniques de la matrice thermoplastique qui peut être utilisée pour des températures allant jusqu'à 300°C. On entend par fibres courtes de carbone des fibres de carbone particulièrement fines qui présentent un diamètre de l'ordre d'un à dix micromètres et une longueur comprise entre 10 et 500 micromètres et qui sont composées presque exclusivement d'atomes de carbone.

Plus particulièrement, un matériau composite selon l'invention comprend une matrice thermoplastique formée à partir d'un polymère thermoplastique, de fibres courtes de carbone et étant dépourvu de nanotube de carbone. On entend par nanotubes de carbone des feuillets de graphite formés d'atomes de carbone disposés en réseau hexagonal et dont le diamètre est de l'ordre du nanomètre et la longueur peut atteindre plusieurs micromètres.

Le procédé de fabrication selon l'invention permet d'obtenir, de manière inattendue, un matériau composite électriquement conducteur et plus particulièrement présentant une conductivité électrique supérieure à celle d'un matériau composite comprenant des nanotubes de carbone. Ledit matériau composite obtenu par le procédé de fabrication selon l'invention présente une conductivité électrique supérieure à 10² S/m.

En d'autres termes, ledit procédé présente l'avantage d'être plus facile à mettre en œuvre étant donné qu'il n'est pas nécessaire de fonctionnaliser un matériau composite thermoplastique par ajout de nanotubes de carbone pour qu'il devienne un conducteur électrique. De plus, l'absence de nanotube de carbone facilite également le procédé de fabrication selon l'invention étant donné que les contraintes d'intégration des nanotubes de carbone dans la matrice thermoplastique ne se produisent pas.

Contrairement à ce qu'il est décrit dans l'art antérieur relatif à l'ajout de nanotubes de carbone, il a été démontré de manière inattendue que le procédé de fabrication selon l'invention permet d'améliorer la conductivité électrique d'un matériau thermoplastique dépourvu de nanotube de carbone. La suppression des nanotubes de carbone permet de faciliter l'étape d'obtention d'un matériau thermoplastique. De manière plus précise, elle permet d'éliminer d'une part les contraintes de viscosité et d'autre part les contraintes relatives à l'étape de dispersion des nanotubes de carbone de manière homogène dans une matrice thermoplastique.

Ledit procédé de fabrication comprend une étape d'obtention dudit matériau composite. L'étape d'obtention consiste à être en possession (ou à fabriquer) d'un matériau composite thermoplastique comprenant une matrice thermoplastique, des fibres courtes de carbone et étant exempt de nanotube de carbone.

En outre, ledit procédé de fabrication comprend une étape de préchauffage d'un four consistant à préchauffer un four qui est utilisé lors du traitement thermique. Le préchauffage est réalisé à une température cible prédéterminée. La température cible prédéterminée est la température fixe à laquelle le four se trouve lorsqu'il a été préchauffé et elle est maintenue pendant toute la durée du traitement thermique.

En outre, ledit procédé de fabrication comprend une étape d'insertion dudit matériau composite dans ledit four préchauffé, une fois la température cible atteinte.

En outre, ledit procédé de fabrication comprend une étape de chauffage dudit matériau composite dans ledit four à la température cible prédéterminée, maintenue constante pendant une durée prédéterminée. On entend dans la présente description, par le terme « constante », le fait que la température cible est atteinte et reste sensiblement la même pendant toute la durée d'un traitement thermique avec une variation de plus ou moins 10°C.

Les étapes d'insertion et de chauffage dudit matériau composite forment le traitement thermique qui consiste à réaliser un vieillissement sur ledit matériau thermoplastique. Le vieillissement permet de faire subir audit matériau thermoplastique une modification chimique notamment au niveau de l'organisation matricielle. Le traitement thermique agit directement sur les chaines macromoléculaires en diminuant leurs mouvements. Ceci entraine par conséquent un changement de morphologie cristalline qui se traduit par une hausse du taux de cristallinité et donc de la réticulation. L'évolution favorable du taux de cristallinité favorise ainsi la conductivité électrique du matériau thermoplastique traité par ledit traitement thermique et notamment par l'étape de chauffage.

Avantageusement et selon l'invention, ladite étape d'obtention dudit matériau composite consiste à mélanger des fibres de carbone courtes dans ladite matrice thermoplastique pour former des granulés, puis à assembler lesdits granulés pour former ledit matériau composite.

Selon cette variante, ladite étape d'obtention comprend une première étape de mélange des fibres de carbone et de la matrice thermoplastique pour former des granulés et une seconde étape d'assemblage des granulés qui consiste à assembler entre eux les granulés pour former ledit matériau composite sous la forme d'une éprouvette ou d'une pièce.

Avantageusement et selon l'invention, lesdits granulés sont assemblés pour former ledit matériau composite par le biais d'un procédé de moulage par injection haute pression.

Selon cette variante, ledit matériau composite est obtenu par le biais d'un procédé de moulage par injection haute pression. Le procédé de moulage par injection haute pression permet notamment une automatisation du procédé et permet d'avoir un matériau thermoplastique présentant des propriétés intéressantes telles que la résistance mécanique, la résistance à la corrosion, et la résistance en traction.

L'absence de nanotube de carbone simplifie également l'utilisation du procédé de moulage par injection étant donné que les contraintes liées à la viscosité et à la dispersion dans la matrice thermoplastique ne se présentent pas.

D'autres procédés connus de l'homme du métier pourront être utilisés pour former le matériau thermoplastique obtenu lors de l'étape d'obtention.

Avantageusement et selon l'invention, ladite étape de mélange est remplacée par une étape d'acquisition du matériau commercial PEEK 90HMF40 de la marque VICTREX^{™} sous la forme de granulés, par exemple.

Selon cette variante, ledit matériau composite est obtenu à partir de granulés d'un matériau commercialisé sous la dénomination PEEK 90HMF40 de la marque VICTREX^{™}. Ce matériau comprend une matrice thermoplastique formée d'un polymère polyéther éther cétone, auquel, environ 40% de fibres courtes de carbone sont intégrées.

Ledit matériau commercial est facilement accessible car il est simple de se procurer le matériau sous la forme de granulés. Aussi, l'étape de mélange est remplacée par l'achat de granulés prêts à être assemblés pour former le matériau composite qui est traité par ledit procédé de fabrication selon l'invention afin d'obtenir le matériau composite thermoplastique électriquement conducteur selon l'invention.

De plus, l'utilisation de ce matériau commercial permet de s'affranchir de ladite étape de mélange en la remplaçant par l'achat du matériau sous la forme de granulés.

Avantageusement et selon l'invention, ladite matrice thermoplastique est un polycétone, de préférence du polyéther éther cétone.

Selon cette variante, ladite matrice thermoplastique est un polycétone qui fait partie de la famille des polymères thermoplastiques hautes performances. Plus particulièrement, ledit polymère est un polyaryl éther cétone (PAEK) et principalement du polyéther éther cétone (PEEK) ou du polyéther cétone cétone (PEKK). L'avantage de ce type de matrice réside dans la légèreté du matériau qui présente un réel intérêt dans le domaine de l'aéronautique.

En effet, le PEEK présente de nombreux avantages notamment sa résilience, son module mécanique, sa tenue thermique et son inertie chimique. De plus, le PEEK est un matériau hautement performant pouvant résister à des températures élevées (de l'ordre de 200°C à 300°C).

Selon l'invention, ledit matériau composite comprend un taux massique de fibres courtes de carbone compris entre 20 et 45%. Les fibres courtes de carbone confèrent une tenue thermique et mécanique améliorée audit matériau composite ainsi qu'une stabilité dimensionnelle. Aussi, lors de l'étape de chauffage dudit matériau composite, les fibres courtes de carbone contribuent à augmenter la réticulation de la matrice thermoplastique et permettent ainsi une amélioration de la conductivité électrique lorsque ledit matériau thermoplastique est chauffé pendant une certaine durée à une température cible.

Avantageusement et selon l'invention, ladite durée prédéterminée de ladite étape de chauffage dudit matériau composite varie en fonction de ladite température cible prédéterminée.

Selon cette variante, la durée prédéterminée de ladite étape de chauffage dudit matériau composite sera d'autant plus longue que la température cible prédéterminée sera faible.

Aussi, la durée de traitement thermique peut être adaptée selon la conductivité électrique à atteindre pour un matériau thermoplastique. En effet, lorsque ledit four atteint une température cible prédéterminée et que le matériau composite est introduit dans ledit four ; plus la durée de l'étape de chauffage dudit matériau est longue, plus la conductivité du matériau thermoplastique est améliorée.

En outre, la température peut également être adaptée selon la durée du traitement thermique. En effet, plus la température du four est élevée, moins la durée de l'étape de chauffage du traitement thermique est longue. La durée de l'étape de chauffage varie donc en fonction de la température et réciproquement.

Selon l'invention, ladite température cible prédéterminée est comprise entre 200°C et 300°C ± 10°C.

Ledit matériau composite subit une étape de chauffage pendant une durée prédéterminée dans un four préchauffé à une température fixe prédéterminée. Une fois cette température atteinte lors de l'étape de préchauffage dudit four, la température prédéterminée est maintenue fixe et constante pendant l'étape de chauffage dudit matériau composite. En d'autres termes, la température est dite constante lorsqu'elle est globalement maintenue à la température cible et qu'un écart de plus ou moins 10°C est admis pendant l'étape de chauffage dudit matériau composite.

Selon l'invention, ladite durée prédéterminée de ladite étape de chauffage est comprise entre deux heures et 30 heures.

Ladite durée prédéterminée de l'étape de chauffage dudit matériau composite correspond à la durée pendant laquelle ledit matériau composite thermoplastique est chauffé dans ledit four à une température cible qui est constante.

Lorsque la durée de l'étape de chauffage dudit matériau composite augmente, la conductivité électrique est améliorée.

L'invention concerne également un matériau composite électriquement conducteur obtenu à partir dudit procédé de fabrication selon l'invention.

Selon une variante de l'invention, ledit matériau composite électriquement conducteur obtenu à partir dudit procédé de fabrication présente une conductivité électrique comprise entre 10¹ Siemens/mètre et 10³ Siemens/mètre.

Aussi, ledit matériau composite comprenant des fibres courtes de carbone en absence de nanotubes de carbone et fabriqué par le procédé selon l'invention présente donc une conductivité électrique élevée de l'ordre de 50 à 200 Siemens/mètre (S/m) pour une durée de traitement comprise entre deux heures et 30 heures.

Ledit matériau composite électriquement conducteur obtenu à partir dudit procédé de fabrication est un matériau autochauffant. En d'autres termes, une augmentation de la température du matériau composite est générée lorsqu'un courant électrique traverse ledit matériau composite électriquement conducteur. Par conséquent, ledit matériau composite électriquement conducteur permet le passage d'un courant électrique et peut ainsi assurer le maintien en température ou le dégivrage d'une pièce formée par ledit matériau composite.

L'invention concerne également une utilisation dudit matériau composite électriquement conducteur selon l'invention, pour former des pièces destinées à être agencées dans un véhicule de transport, notamment un véhicule ferroviaire ou un véhicule aérien.

Avantageusement et selon l'invention, ledit matériau composite électriquement conducteur est utilisé pour maintenir en température lesdites pièces destinées à être agencées dans un véhicule de transport.

Selon cette variante, les pièces formées par ledit matériau composite sont électriquement conductrices et peuvent maintenir une température souhaitée. En outre cela permet d'éviter les pertes par conduction et de réchauffer ladite pièce pour augmenter les performances. Par exemple, un conduit formé par ledit matériau composite électriquement conducteur permet de maintenir en température ledit conduit afin de limiter les échanges thermiques.

L'invention permet donc d'obtenir un procédé de maintien en température qui consiste à utiliser une pièce formée par un matériau composite électriquement conducteur et à alimenter cette pièce par un courant électrique de manière à augmenter la température de ladite pièce pour permettre un maintien en température de cette pièce.

Avantageusement et selon l'invention, ledit matériau composite électriquement conducteur est utilisé pour dégivrer lesdites pièces destinées à être agencées dans un véhicule de transport.

Selon cette variante, les pièces formées par ledit matériau composite sont électriquement conductrices et peuvent être dégivrées lorsqu'un courant électrique les traverse.

L'invention permet donc d'obtenir un procédé de dégivrage qui consiste à utiliser une pièce formée par un matériau composite électriquement conducteur et à alimenter cette pièce par un courant électrique de manière à augmenter la température de ladite pièce pour permettre son dégivrage.

L'invention concerne également un équipement d'un véhicule aérien, notamment un corps de vanne pneumatique, un corps d'actionneur, une chambre de mélange, un tuyau de distribution basse pression, une volute turbine, un boîtier électrique comprenant ledit matériau composite selon l'invention.

En outre, tout équipement d'un véhicule aérien formé par un matériau composite peut être formé par un matériau composite selon l'invention.

Selon une variante, les équipements formés par un matériau composite peuvent être agencés soit dans un système d'air tels que par exemple des turbines ou des condenseurs, soit dans un autre système hors système d'air tels que par exemple un bec de bord d'attaque sur une voilure ou des ailes d'un aéronef turbopropulseur. Aussi, un équipement formé par un matériau composite peut être réchauffé lorsqu'un courant électrique le traverse afin d'être maintenu en température ou dégivré.

En outre, les équipements formés par ledit matériau composite sont plus légers que les équipements formés par un alliage aluminium ce qui permet par conséquent d'alléger le véhicule aérien dans lequel ils sont agencés.

Les avantages d'un tel procédé de fabrication selon l'invention s'appliquent *mutatis mutandis* à ladite utilisation du matériau obtenu selon l'invention et audit équipement comprenant le matériau composite obtenu selon l'invention.

### Liste des figures

D'autres buts, caractéristiques et avantages de l'invention apparaîtront à la lecture de la description suivante donnée à titre uniquement non limitatif et qui se réfère aux figures annexées dans lesquelles :
[Fig. 1] est une vue schématique d'un procédé de fabrication d'un matériau composite thermoplastique selon un mode de réalisation de l'invention ; et
[Fig. 2] représente l'évolution de la conductivité électrique de matériaux présentant différentes compositions et ayant été traités par le procédé de fabrication selon un mode de réalisation de l'invention.

### Description détaillée d'un mode de réalisation de l'invention

Le procédé décrit ci-après permet la fabrication d'un matériau thermoplastique électriquement conducteur comprenant uniquement une matrice thermoplastique et des fibres courtes de carbone, et étant exempt de nanotube de carbone.

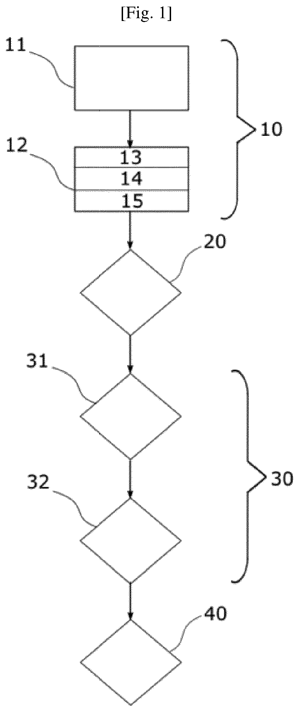

Un procédé de fabrication selon un mode de réalisation, tel que représenté sur la figure 1, peut comprendre :
- une étape 10 d'obtention du matériau composite,
- une étape 20 de préchauffage du four,
- une étape 31 d'insertion du matériau composite obtenu à l'étape 10,
- une étape 32 de chauffage du matériau composite inséré dans le four lors de l'étape 31, et
- une étape 40 de refroidissement du matériau composite électriquement conducteur.

Selon ce mode de réalisation, l'étape 10 d'obtention du matériau composite comprend une première étape 11 de compoundage permettant le mélange des composants (fibres de carbone courtes et polymère PEEK) pour obtenir des granulés de matériau composite. Le mélange des composants se fait avec un ramollissement du polymère PEEK.

L'étape de compoundage consistant à mélanger des matières plastiques et des additifs permet l'obtention de matériaux thermoplastiques utilisés sous la forme de « compound » également appelés composites ou granulés plastiques. Dans ce mode de réalisation, la matrice thermoplastique PEEK et les fibres de carbone sont mélangées pour obtenir le matériau composite, sous forme de granulés.

La première étape 11 de mélange peut également être remplacée par l'achat dans le commerce d'un matériau composite sous la forme de granulés.

Généralement, les granulés sont ensuite assemblés en étant fondus, extrudés ou moulés pour fabriquer des pièces de matériau thermoplastique. Selon un mode de réalisation, les granulés peuvent être assemblés pour former des plaques selon la méthode de presse à plaque chauffante plus connue sous la dénomination anglaise de « Hot plate press ». Les plaques obtenues peuvent ensuite être mises en forme suivant le besoin pour former une pièce et notamment un équipement d'un aéronef tel qu'un boîtier par exemple.

Selon un autre mode de réalisation, les granulés peuvent être moulés par injection pour former des pièces de matériau thermoplastique.

La seconde étape 12 est réalisée selon ce dernier mode de réalisation qui consiste à assembler des granulés de matériau composite obtenu lors de l'étape 11 de mélange pour former les éprouvettes de matériaux composites thermoplastiques par moulage par injection. On entend par éprouvette, un matériau sous la forme de pièces de fabrication qui sont normalisées et qui sont destinées à être utilisées pour étudier le comportement d'un matériau.

Le moulage par injection également appelé injection plastique consiste à fabriquer des pièces à partir de matière thermoplastique sous forme de poudre ou de granulés à l'aide de presses d'injection plastique. La matière thermoplastique sous forme de granulés ou de poudre est introduite dans une trémie afin d'alimenter une vis de plastification contenue dans un fourreau chauffé. Une première phase 13 de plastification permet à la matière de passer d'un état solide à un état fondu par la chaleur apportée par les résistances et le cisaillement induit par la rotation de la vis. Puis, s'ensuit la phase 14 d'injection consistant à pousser la matière par la vis dans un moule chaud. La phase 15 de compactage permet de maintenir en pression la cavité qui se remplit de matière thermoplastique au fur et à mesure que la pièce se refroidit et se rétracte.

L'étape 20 de préchauffage du four consiste à préchauffer le four dans lequel sont introduits les matériaux composites obtenus à l'étape 10. Le four est configuré pour pouvoir atteindre la température cible prédéterminée, c'est-à-dire la température du four à laquelle les matériaux composites peuvent être chauffés. Le préchauffage du four permet de chauffer le four jusqu'à atteindre, dans ce mode de réalisation, une température de 250°C avec une variation acceptable de ±10°C. La température du four est mesurée à l'aide d'une sonde thermique ou d'un enregistreur de température intégré au four. Selon ce mode de réalisation, le temps de préchauffage pour atteindre la température de 250°C dépend du four utilisé et de ses performances.

L'étape 31 d'insertion du matériau composite consiste à insérer les éprouvettes de matériaux composites thermoplastiques obtenues à l'étape 10 dans le four préchauffé et ayant atteint la température cible qui selon ce mode de réalisation s'élève à 250°C.

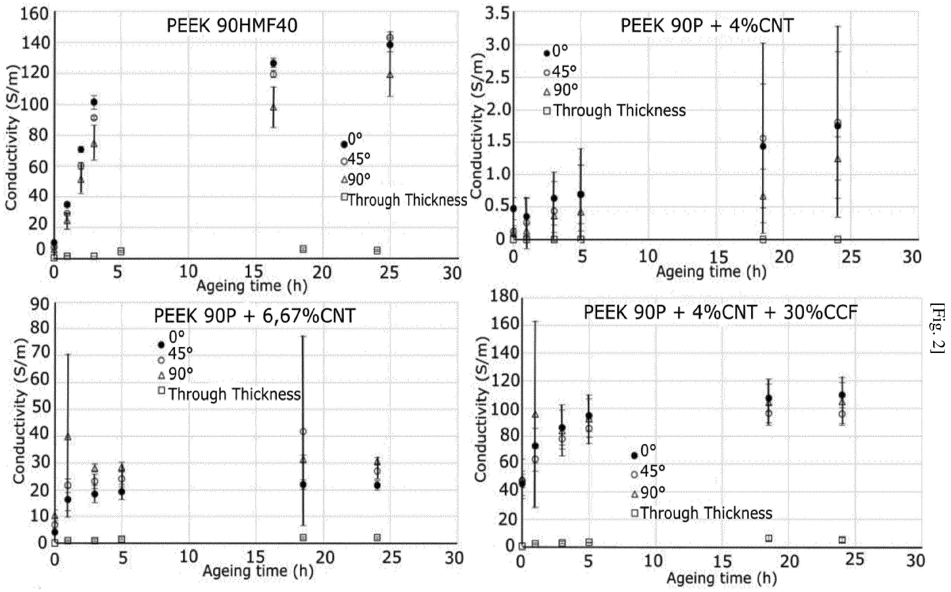

L'étape 32 de chauffage permet de chauffer les éprouvettes insérées dans le four à 250°C pendant une durée prédéterminée. Par exemple, pour les matériaux testés tel que représenté sur la Figure 2, on a utilisé des éprouvettes chauffées chacune pendant des durées de 1 heure, 3 heures, 5 heures, 16 heures, 18 heures, 24 heures et 25 heures.

Le chauffage des éprouvettes est réalisé en maintenant le four à la température cible.

Les éprouvettes ont ensuite été retirées du four lorsque la durée prédéterminée a été atteinte (1 heure, 3 heures, 5 heures, 16 heures, 18 heures, 24 heures et 25 heures selon les matériaux) et l'étape 40 de refroidissement du matériau composite électriquement conducteur a permis de refroidir les éprouvettes ayant subi le traitement thermique. Les éprouvettes ont été refroidies à l'air ambiant pendant 30 minutes.

A la suite du refroidissement des éprouvettes de matériau composite, la mesure de la conductivité a été réalisée.

Selon une variante, on peut prévoir une succession d'étapes de chauffage. Chaque étape de chauffage étant caractérisée par une température et une durée prédéterminées distinctes de l'étape de chauffage précédente. A titre d'exemple, on peut prévoir une première étape de chauffage dans un four à 250°C pendant 5 heures, suivie d'une seconde étape de chauffage dans un four à 190°C pendant 2 heures.

La figure 2 illustre des graphiques représentant l'évolution de la conductivité électrique en fonction de la durée d'un traitement thermique 30 comprenant une étape 31 d'insertion et une étape 32 de chauffage du matériau.

Les matériaux analysés à la figure 2 sont sous forme d'éprouvettes qui ont subi le procédé de vieillissement selon le traitement thermique 30 du procédé de fabrication. Quatre matériaux thermoplastiques présentant chacun une composition distincte sont analysés avant (0h de traitement thermique) et après traitement thermique (1 heure, 3 heures, 5 heures, 16 heures, 18 heures, 24 heures et 25 heures selon les matériaux).

Les différents matériaux testés et présentés dans la figure 2 comprennent tous une base de polyéther éther cétone (PEEK).

Le matériau PEEK 90HMF40 est un polymère connu sous l'appellation commerciale du produit vendu par VICTREX^{™} comprenant un polymère de PEEK renforcé par des fibres de carbone courtes à un taux de 40%.

Le matériau PEEK 90P + 4%CNT est un polymère de PEEK vierge auquel 4% de nanotubes de carbone ont été intégrés à la matrice.

Le matériau PEEK 90P + 6,67%CNT est un polymère de PEEK vierge auquel 6,67% de nanotubes de carbone ont été intégrés à la matrice.

Le matériau PEEK 90P + 4%CNT + 30%CCF est un polymère PEEK vierge auquel 4% de nanotubes de carbone ont été intégrés à la matrice comprenant 30% de fibres courtes de carbone.

Les trois matériaux précédemment cités (PEEK 90P + 4%CNT, PEEK 90P + 6,67%CNT et 90P + 4%CNT + 30%CCF) ont été traités thermiquement afin de pouvoir comparer les résultats de ces traitements thermiques par rapport aux résultats obtenus par un procédé selon l'invention (mis en œuvre selon un mode de réalisation avec un matériau 90HMF40).

Les éprouvettes de matériau 90HMF40 ont été obtenues à partir de granulés achetés dans le commerce. Par la suite, les granulés ont subi l'étape 12 d'assemblage selon le procédé de la figure 1 pour former les éprouvettes.

Les matériaux sont sous forme d'éprouvettes dont les dimensions sont les suivantes : 80 millimètres (mm) de longueur et 10 mm de largeur. Les éprouvettes formées par le matériau 90HMF40 ont une épaisseur de 2 mm et les éprouvettes formées par les autres matériaux présentent une épaisseur de 3 mm.

Des éprouvettes de chaque matériau décrit ci-dessus ont été introduites dans un four préchauffé à une température s'élevant à 250°C puis ont été chauffées pendant 1 heure, 3 heures, 5 heures, 16 heures, 18 heures, 24 heures et 25 heures (en fonction des matériaux) dans le four à la température constante de 250°C.

La température du four est maintenue constante pendant la durée de l'étape de chauffage des éprouvettes de matériau composite et peut être vérifiée à l'aide d'une sonde thermique ou d'un enregistreur de température intégré au four.

La mesure de la conductivité électrique est effectuée sur l'ensemble des éprouvettes ayant subi le traitement thermique et par conséquent l'étape de chauffage pendant des durées distinctes (1 heure, 3 heures, 5 heures, 16 heures, 18 heures, 24 heures et 25 heures). Ceci permet d'établir une courbe montrant l'évolution de la conductivité électrique selon la durée de l'étape de chauffage.

La conductivité électrique est mesurée en Siemens par mètre (S/m) à l'aide de tests électrique réalisés, par exemple avec un ohmmètre Keithley 6517B, une tension d'entrée inférieure à 5V sur des éprouvettes. Chaque extrémité des éprouvettes est recouverte d'une peinture argent pour permettre la mesure de la conductivité. Ces tests électriques sont faits à température ambiante en utilisant de faibles valeurs de courant électriques (de l'ordre du mA) pour éviter les phénomènes d'échauffements des éprouvettes.

La conductivité électrique est mesurée sur l'ensemble des éprouvettes selon quatre configurations d'essai différentes :
- Sens 0° : étude de la conductivité électrique à 0° dans la direction des fibres par rapport à l'injection ;
- Sens 45° : étude de la conductivité électrique à 45° dans la direction des fibres par rapport à l'injection ;
- Sens 90° : étude de la conductivité électrique à 90° dans la direction des fibres (direction transverse aux fibres) par rapport à l'injection ;
- Sens de l'épaisseur d'une plaque : étude de la conductivité électrique dans l'épaisseur d'une plaque d'éprouvette.

Les graphes de la figure 2 mettent en évidence une tendance générale d'augmentation importante de la conductivité électrique lorsqu'un matériau a été soumis au procédé de vieillissement et notamment à l'étape de chauffage.

On constate que lorsque le matériau est chauffé pendant au moins une heure, l'étape de chauffage du traitement thermique rend progressivement électriquement conducteur le matériau composite. Lorsque le matériau composite n'est pas traité par chauffage, il n'est pas électriquement conducteur. Le fait de chauffer va permettre de rendre électriquement conducteur un matériau thermoplastique. En outre, plus la durée de l'étape de chauffage du matériau augmente, plus la conductivité électrique augmente. Ce résultat est constaté sur l'ensemble des matériaux PEEK dépourvus ou non de nanotube de carbone.

On observe également, qu'en absence de nanotube de carbone tel qu'illustré par le matériau PEEK 90HMF40, la conductivité électrique augmente très nettement jusqu'à 10 fois lorsque le matériau a subi le traitement thermique pendant une durée de 25 heures.

De plus, la conductivité électrique du matériau PEEK 90HMF40 traité pendant 25 heures s'élève à 140 S/m contre 110 S/m pour le matériau PEEK 90P + 4%CNT + 30%CCF traité pendant 25 heures. On constate qu'un matériau dépourvu de nanotube et ayant subi le traitement thermique présente une conductivité électrique suffisante, c'est-à-dire une conductivité permettant au moins de décharger l'électricité statique du matériau.

Ces résultats permettent donc de mettre en évidence un procédé plus rapide et simple à mettre en œuvre qui sera par conséquent moins coûteux du fait de la suppression des nanotubes de carbone.

On remarque également que l'orientation des fibres de carbone influence la conductivité électrique lorsqu'elle est analysée selon le sens 0°, 45° ou 90° dans la direction des fibres. Cependant, l'influence de l'orientation des fibres est négligeable par rapport aux effets du traitement thermique appliqué. La conductivité électrique est très faible et le traitement thermique n'a aucun effet lorsqu'elle est analysée avec l'orientation selon l'épaisseur de la plaque, pour les l'ensemble des éprouvettes des quatre matériaux, chauffées pendant différentes durées. Ceci confirme que la conductivité électrique dans le matériau thermoplastique est permise à travers les fibres de carbone et s'effectue donc dans le sens de la fibre. La présence de nanotubes de carbone ne conduit pas à un accroissement de la conductivité électrique de manière significative.

Aussi, l'intérêt majeur de cette invention réside dans le fait d'utiliser un matériau déjà connu et qualifié par certains acteurs de l'aéronautique, qui par le biais d'un traitement thermique atteint des valeurs de conductivité suffisante, c'est-à-dire permettant au moins de décharger l'électricité statique. En outre, la fabrication de pièces avec des nanotubes de carbone qui est difficile et coûteuse, et qui nécessite la qualification d'un nouveau matériau pour l'aéronautique n'est pas nécessaire.

## Revendications

1. Procédé de fabrication d'un matériau composite électriquement conducteur, ledit procédé comprenant au moins les étapes suivantes :
- une étape (10) d'obtention dudit matériau composite comprenant une matrice thermoplastique et de fibres courtes de carbone, et étant exempt de nanotube de carbone, ledit matériau composite comprenant un taux massique de fibres courtes de carbone compris entre 20 et 45%, et lesdites fibres courtes présentant un diamètre de l'ordre d'un à dix micromètres et une longueur comprise entre 10 et 500 micromètres et étant composées presque exclusivement d'atomes de carbone,
- une étape (20) de préchauffage d'un four jusqu'à atteindre une température cible prédéterminée,
- une étape (31) d'insertion dudit matériau composite dans ledit four préchauffé, une fois la température cible atteinte, et
- une étape (32) de chauffage dudit matériau composite dans ledit four à la température cible prédéterminée, maintenue constante pendant une durée prédéterminée comprise entre deux heures et 30 heures, ladite température cible prédéterminée étant comprise entre 200°C et 300°C ± 10°C.

2. Procédé de fabrication d'un matériau composite selon la revendication 1, **caractérisé en ce que** ladite étape (10) d'obtention dudit matériau composite consiste à mélanger (11) des fibres de carbone courtes dans ladite matrice thermoplastique pour former des granulés, puis à assembler (12) lesdits granulés pour former ledit matériau composite.

3. Procédé de fabrication d'un matériau composite selon la revendication 2, caractérisé en ce lesdits granulés sont assemblés pour former ledit matériau composite par le biais d'un procédé de moulage par injection haute pression.

4. Procédé de fabrication d'un matériau selon l'une des revendications 1 à 3, **caractérisé en ce que** ladite matrice thermoplastique est un polycétone, de préférence du polyéther éther cétone.

5. Procédé de fabrication d'un matériau composite selon l'une des revendications 1 à 4, **caractérisé en ce que** ladite durée prédéterminée de ladite étape (32) de chauffage dudit matériau composite varie en fonction de ladite température cible prédéterminée.

6. Utilisation d'un matériau composite électriquement conducteur obtenu à partir dudit procédé de fabrication selon l'une des revendications 1 à 5, pour former des pièces destinées à être agencées dans un véhicule de transport, notamment un véhicule ferroviaire ou un véhicule aérien.

7. Utilisation selon la revendication 6 pour maintenir en température lesdites pièces destinées à être agencées dans un véhicule de transport.

8. Utilisation selon la revendication 6 pour dégivrer lesdites pièces destinées à être agencées dans un véhicule de transport.

9. Equipement d'un véhicule aérien, notamment un corps de vanne pneumatique, un corps d'actionneur, une chambre de mélange, un tuyau de distribution basse pression, une volute turbine, un boîtier électrique, comprenant un matériau composite obtenu à partir dudit procédé de fabrication selon l'une des revendications 1 à 5.

## Patentansprüche

1. Verfahren zur Herstellung eines elektrisch leitfähigen Verbundmaterials, wobei das Verfahren mindestens die Schritte umfasst:
- einen Schritt (10) des Erhaltens des Verbundmaterials, das eine thermoplastische Matrix und kurze Kohlenstofffasern umfasst und frei von Kohlenstoffnanoröhren ist, worin das Verbundmaterial einen Massengehalt an kurzen Kohlenstofffasern zwischen 20 und 45% umfasst und die kurzen Kohlenstofffasern einen Durchmesser im Bereich von einem bis zehn Mikrometern und eine Länge zwischen 10 und 500 Mikrometern aufweisen und fast ausschließlich aus Kohlenstoffatomen bestehen,
- einen Schritt (20) des Vorheizens eines Ofens, bis eine bestimmte Zieltemperatur erreicht ist,
- einen Schritt (31) des Einführens des Verbundmaterials in den vorgewärmten Ofen, sobald die Zieltemperatur erreicht ist, und
- einen Schritt (32) des Erhitzens des Verbundmaterials in dem Ofen auf die bestimmte Zieltemperatur, die für eine bestimmte Dauer zwischen 2 Stunden und 30 Stunden konstant gehalten wird, wobei die bestimmte Zieltemperatur zwischen 200°C und 300°C ± 10°C liegt.

2. Verfahren zur Herstellung eines Verbundmaterials nach Anspruch 1, **dadurch gekennzeichnet, dass** der Schritt (10) zum Erhalten des Verbundmaterials das Mischen (11) von kurzen Kohlenstofffasern in der thermoplastischen Matrix zur Bildung von Granulat und das anschließende Zusammenfügen (12) des Granulats zur Bildung des Verbundmaterials umfasst.

3. Verfahren zur Herstellung eines Verbundmaterials nach Anspruch 2, **dadurch gekennzeichnet, dass** das Granulat zur Bildung des Verbundmaterials durch ein Hochdruck-Spritzgussverfahren zusammengefügt wird.

4. Verfahren zur Herstellung eines Werkstoffs nach einem der Ansprüche 1 bis 3, **dadurch gekennzeichnet, dass** die thermoplastische Matrix ein Polyketon, vorzugsweise ein Polyetheretherketon, ist.

5. Verfahren zur Herstellung eines Verbundmaterials nach einem der Ansprüche 1 bis 4, **dadurch gekennzeichnet, dass** die bestimmte Dauer des Schritts (32) des Erhitzens des Verbundmaterials in Abhängigkeit von der bestimmten Zieltemperatur variiert.

6. Verwendung eines elektrisch leitfähigen Verbundmaterials, das durch das Herstellungsverfahren nach einem der Ansprüche 1 bis 5 erhalten wurde, zum Formen von Teilen, die in einem Transportfahrzeug, insbesondere einem Schienenfahrzeug oder einem Luftfahrzeug, angeordnet werden sollen.

7. Verwendung nach Anspruch 6 zur Aufrechterhaltung der Temperatur der Teile, die dazu bestimmt sind, in einem Transportfahrzeug angeordnet zu werden.

8. Verwendung nach Anspruch 6 zur Enteisung der Teile, die in einem Transportfahrzeug angeordnet werden sollen.

9. Vorrichtung eines Luftfahrzeugs, insbesondere ein pneumatischer Ventilkörper, ein Aktuatorkörper, eine Mischkammer, eine Niederdruckförderleitung, ein Turbinenradsatz oder ein elektrisches Gehäuse, die ein Verbundmaterial umfassen, das durch das Verfahren zur Herstellung nach einem der Ansprüche 1 bis 5 erhalten wurde.

## Claims

1. Method for manufacturing an electrically conductive composite material, said method comprising at least the following steps:
- a step (10) of obtaining said composite material which comprises a thermoplastic matrix and short carbon fibers and is free of carbon nanotubes, said composite material comprises a mass content of short carbon fibers of between 20 and 45% and said short carbon fibers having a diameter in the range of one to ten micrometers and a length of between 10 and 500 micrometers and being composed almost exclusively of carbon atoms,
- a step (20) of preheating a furnace until a predetermined target temperature is reached,
- a step (31) of inserting said composite material into said preheated furnace once the target temperature has been reached, and
- a step (32) of heating said composite material in said furnace at the predetermined target temperature which is kept constant for a predetermined duration comprised between 2 hours and 30 hours, said predetermined target temperature being comprised between 200°C and 300°C ± 10°C.

2. Method for manufacturing a composite material according to claim 1, **characterized in that** said step (10) of obtaining said composite material involves mixing (11) short carbon fibers in said thermoplastic matrix to form granules, and then assembling (12) said granules to form said composite material.

3. Method for manufacturing a composite material according to claim 2, **characterized in that** said granules are assembled to form said composite material by means of a high-pressure injection molding process.

4. Method for manufacturing a material according to any of claims 1 to 3, **characterized in that** said thermoplastic matrix is a polyketone, preferably polyether ether ketone.

5. Method for manufacturing a composite material according to any of claims 1 to 4, **characterized in that** said predetermined duration of said step (32) of heating said composite material varies depending on said predetermined target temperature.

6. Use of an electrically conductive composite material obtained from said method for manufacturing according to one of claims 1 to 5, to form parts intended to be arranged in a transport vehicle, in particular a rail vehicle or an air vehicle.

7. Use according to claim 6 for maintaining the temperature of said parts intended to be arranged in a transport vehicle.

8. Use according to claim 6 for de-icing said parts intended to be arranged in a transport vehicle.

9. Apparatus of an air vehicle, in particular a pneumatic valve body, an actuator body, a mixing chamber, a low-pressure delivery pipe, a turbine volute, or an electric enclosure, comprising a composite material obtained from said method for manufacturing according to one of claims 1 to 5.
